# FASCICULE DE BREVET EUROPEEN

(11) **EP 1 952 074 B1**
(45) Date de publication et mention de la délivrance du brevet: **23.03.2016**
(21) Numéro de dépôt: 06831062.2
(22) Date de dépôt: 06.11.2006
(51) Int. Cl.: F24J 2/54, F24J 2/38, F24J 2/10

(54) **MODULE SOLAIRE ELEMENTAIRE DESTINE A UN DISPOSITIF DE RECUPERATION DU RAYONNEMENT SOLAIRE**
ELEMENTARES SOLARMODUL BESTIMMT FÜR EINE EINRICHTUNG ZUR GEWINNUNG SOLARER STRAHLUNG
BASIC SOLAR MODULE FOR A DEVICE COLLECTING SOLAR RADIATION

(30) Priorité: 07.11.2005 FR 0511280
(43) Date de publication de la demande: 06.08.2008
(73) Titulaire: EXOSUN, 33650 Martillac (FR)
(72) Inventeur: Conchy, Frédéric, 33640 Arbanats (FR); Rochier, Dominique, 33380 Biganos (FR)
(74) Mandataire: Novagraaf Technologies
(86) Numéro de dépôt international: PCT/FR2006/002459
(87) Numéro de publication internationale: WO 2007/051928

(56) Documents cités:
- EP-A- 0 276 484
- WO-A-2005/003647
- DE-A1- 2 755 722
- DE-A1- 19 922 795
- GB-A- 2 235 786
- US-A- 3 988 166
- US-A- 4 136 671
- US-A- 4 696 285
- US-A- 4 832 002
- US-A1- 2004 074 490

## Description

L'invention concerne un module solaire élémentaire de traitement d'un rayonnement solaire destiné à un dispositif de récupération du rayonnement solaire de type concentrateur-collecteur solaire à foyer fixe.

Le document US 6 058 930 décrit un système modulaire comportant un arrangement de récepteurs solaires. Une barre de torsion sert d'axe principal de rotation pour les récepteurs solaires qui sont répartis de chaque côté de ladite barre de torsion. L'axe principal de rotation est orienté selon une direction dite « nord-sud » autour duquel les récepteurs solaires s'orientent de l'est vers l'ouest. Un tel système doit supporter, de par sa conception, des charges énormes pour assurer son maintien au sol, résultant des vents ou tout autre phénomène naturel. De plus, tous les efforts de pilotage sont concentrés sur l'axe principal de rotation qui est sollicité majoritairement en torsion. Ceci nécessite une énergie importante qui réduit d'autant le rendement d'un tel système. D'autre part, la haute performance des pièces mécaniques mises en jeu qui en résulte entraîne un coût de réalisation et de mise en place élevé.

Les documents US2004/074490. WO2005/003647 et DE 2755722 décrivent un bâti pour un module solaire comportant un surface arrondie de forme cylindrique de révolution reposant sur des roulettes montées à rotation par rapport à un support fixe afin de permettre un mouvement d'oscillation en rotation du bâti par rapport au support fixe.

Un but de l'invention est de réduire l'énergie nécessaire au fonctionnement d'un tel système modulaire tout en réduisant les coûts de fabrication et de mise en place.

Pour atteindre ce but, il est prévu, selon l'invention, un module solaire élémentaire avec les caractéristiques de la revendication 1.

Ainsi la surface arrondie permet une oscillation du bâti, nécessitant des efforts a minima, et donc une énergie minimale, pour leur faire effectuer un mouvement de rotation. Par conséquent, les pièces mécaniques n'ont plus besoin d'être à haute performance, ce qui les simplifie et réduit leur coût de fabrication et de mise en oeuvre.

Avantageusement mais facultativement, le module solaire élémentaire présente au moins l'un des caractéristiques additionnelles suivantes :
- l'axe d'oscillation autour duquel le bâti est apte à osciller passe sensiblement par un centre de gravité du module solaire élémentaire,
- les moyens de traitement étant montés mobiles sur le bâti par une liaison pivot, un axe de rotation de la liaison pivot passe sensiblement par un centre de gravité des moyens de traitement,
- l'axe de rotation est sensiblement orthogonal à l'axe d'oscillation du bâti,
- les moyens de traitement comportent au moins un capteur solaire,
- les moyens de traitement comportent au moins une surface réfléchissante du rayonnement solaire, et
- la surface réfléchissante est concave.

Il est aussi prévu, selon l'invention, un dispositif de récupération d'un rayonnement solaire comportant au moins un foyer fixe apte à recevoir le rayonnement solaire, un dispositif de commande de suivi d'un mouvement solaire, au moins un module solaire élémentaire présentant au moins l'un des caractéristiques précédentes et apte à être commandé par le dispositif de commande.

Avantageusement mais facultativement, le dispositif présente au moins l'une des caractéristiques additionnelles suivantes :
- le dispositif comporte au moins deux modules solaires élémentaires, au moins un premier élément de liaison des bâtis de deux modules solaires élémentaires contigus, au moins un deuxième élément de liaison des moyens de traitement des deux modules solaires élémentaires contigus,
- le dispositif de commande est apte à agir sur au moins l'un des premier et deuxième éléments de liaison,
- le dispositif comporte des moyens formant socle aptes à soutenir le bâti du module solaire élémentaire,
- une bande est intercalée entre les moyens formant socle et la surface arrondi du bâti,
- la bande est fixée à une extrémité aux moyens formant socle et à une autre extrémité au bâti,
- la bande présente un profil de surfaces aptes à être en contact avec la surface arrondie du bâti et /ou les moyens formant socle agencé de sorte à permettre l'évacuation d'éventuels débris, et,
- la bande est flexible dans une direction perpendiculaire à des surfaces aptes à être en contact avec la surface arrondie du bâti et /ou les moyens formant socle, et rigide dans les autres directions.

D'autres caractéristiques et avantages de l'invention apparaîtront à la lecture de la description qui va suivre et à l'examen des figures annexées, dans lesquelles :
- la figure 1 représente une vue en trois dimensions d'un dispositif de récupération du rayonnement solaire qui ne fait pas partie de cette invention,
- la figure 2 représente une vue en trois dimensions, de l'avant, d'un ensemble de modules solaires élémentaires qui ne fait pas partie de cette invention,
- la figure 3 représente une vue en trois dimensions, de l'arrière, de l'ensemble de la figure 2,
- la figure 4a représente une vue de coté d'un module solaire élémentaire de l'ensemble de la figure 2,
- la figure 4b représente une vue de coté d'une variante de réalisation du module solaire élémentaire qui ne fait pas partie de cette invention,
- les figures 5a à 5c représentent l'évolution du mouvement de suivi journalier du Soleil de l'ensemble de la figure 2,
- les figures 6a et 6b représentent une vue en trois dimensions d'un deuxième mode de réalisation d'un ensemble de modules solaires élémentaires qui ne fait pas partie de cette invention,
- les figures 7a et 7b représentent une vue en trois dimensions d'une variante de réalisation de l'ensemble de modules solaires élémentaires de la figure 2 en accord avec cette invention.

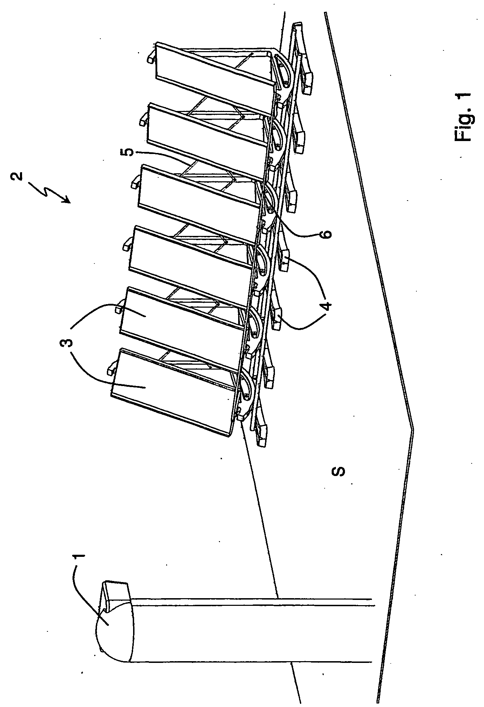

En référence à la figure 1, un dispositif de récupération du rayonnement solaire de type concentrateur-collecteur solaire à foyer fixe comprend une cible ou un foyer fixe 1, ici situé au sommet d'un poteau. Ce foyer fixe est apte à recevoir un rayonnement solaire concentré par un ensemble 2 formé de modules solaires élémentaires 3 qui, dans le cas illustré ici, réfléchissent le rayonnement solaire vers le foyer fixe 1. Les différents modules solaires élémentaires reposent, ici, sur des socles 4. De plus, le dispositif de récupération du rayonnement solaire comporte un dispositif de commande, non représenté, qui permet de réaliser le suivi solaire comme cela sera décrit ultérieurement. L'ensemble du dispositif de récupération du rayonnement solaire est généralement monté dans un emplacement éclairé du lever au coucher du Soleil sur un sol ou une surface S.

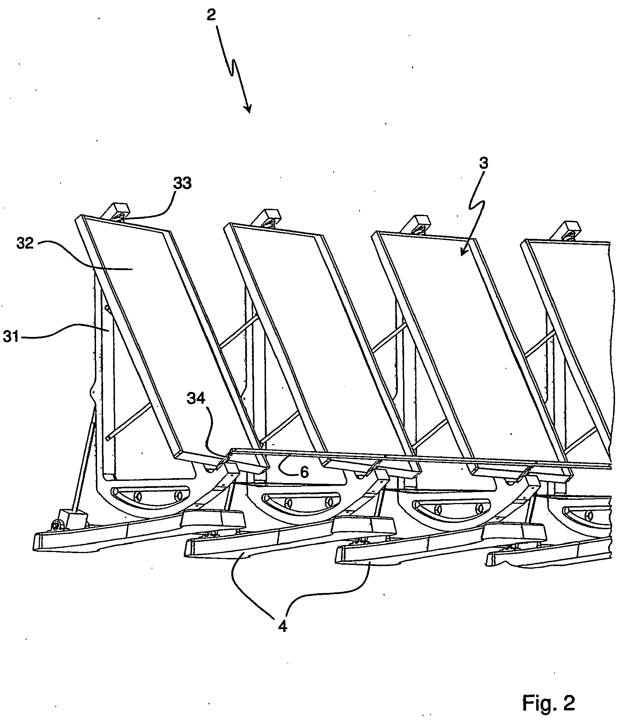

En référence aux figures 2, 3 et 4a, nous allons maintenant décrire dans le détail un module solaire élémentaire 3. Un module solaire élémentaire comprend un bâti 31 posé, ici indirectement, sur le sol par l'intermédiaire d'un socle 4. Le module solaire élémentaire 3 comporte des moyens de traitements 32 du rayonnement solaire R qui sont montés mobiles à rotation sur le bâti 31 par l'intermédiaire d'une liaison pivot 33. Les moyens de traitement 32 présentent un centre de gravité qui est situé sensiblement sur l'axe de rotation de la liaison pivot 33. Ainsi, les moyens de traitement 32 sont équilibrés de manière optimale par rapport à l'axe de rotation. Ici, les moyens de traitement 32 sont un cadre réflecteur comportant une surface apte à réfléchir un rayonnement solaire. Cette surface peut être sensiblement plane ou bien concave dont un centre de courbure est situé sensiblement au voisinage du foyer fixe 1, une fois le dispositif de récupération du rayonnement solaire construit. En variante, les moyens de traitement peuvent comprendre des capteurs solaires (cellules photovoltaïques, capteurs thermiques, etc..).

Le module solaire élémentaire comprend des moyens de mise en rotation 34 des moyens de traitement 32. Ici, les moyens de mise en rotation 34 comportent un levier en forme de barre lié rigidement au cadre réflecteur à l'une des ses extrémités et relié, au niveau de l'autre de ses extrémités à un organe de liaison 6.

Le bâti 31 est ici de forme générale en triangle rectangle et comporte deux cotés adjacents 312 et 313 et un coté 311 formant l'hypoténuse. Les moyens de traitement 32 s'étendent parallèlement au coté 311 et sont liés au bâti au niveau des extrémités des cotés 312 et 313. Le coté 313 présente une surface arrondie 314 de forme cylindrique de révolution qui est apte à coopérer avec une surface 41 sensiblement plane du socle 4 associé afin de permettre au bâti d'osciller. Cette surface 314 est surmontée par une masse additionnelle 315. Le rôle de cette masse 315 est de permettre d'avoir un centre de gravité du module solaire élémentaire qui est sensiblement sur un axe de révolution de la surface arrondie 314. Ceci permet, comme pour les moyens de traitement, d'équilibrer de manière optimale le module dans un mouvement d'oscillation 10 autour de cet axe de révolution qui est alors l'axe d'oscillation du module.

Le bâti 31 comprend des moyens de mise en oscillation 52. Ces derniers sont, ici, une tringlerie 52 dont une extrémité libre est liée à un coté 312 du bâti. L'autre extrémité de la tringlerie 52 est reliée à un organe de commande 51 en relation avec le dispositif de commande précité. Le mouvement du bâti oscillant vis à vis du sol va permettre un suivi saisonnier du soleil.

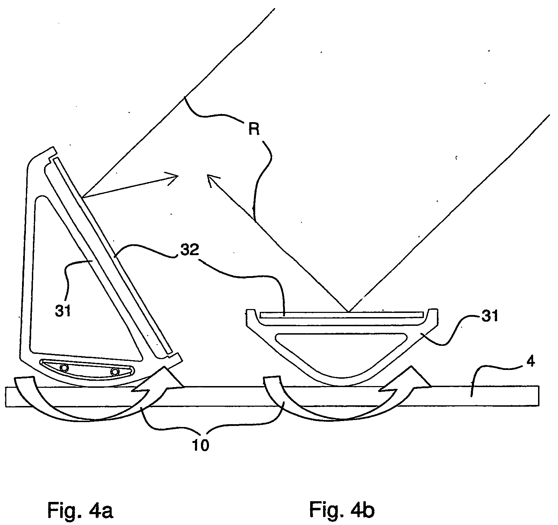

En référence à la figure 4b, est illustrée une variante de réalisation du bâti 31. Il se différentie du mode de réalisation précédent par le positionnement de la surface arrondie 314 qui est ici réalisée au niveau du raccordement des cotés adjacents du bâti. Cela permet d'adapté le dispositif de récupération du rayonnement solaire suivant la réflexion désirée et la situation géographique du lieu de son implantation.

L'ensemble 2 du dispositif de récupération du rayonnement solaire est réalisé par l'assemblage de deux ou plus modules solaires élémentaires 3. Deux modules solaires élémentaires contigus sont reliés entre eux d'une part au niveau de leur bâti 31 respectif et d'autre part, éventuellement au niveau de leurs moyens de traitement 32 respectifs. Au niveau des bâtis 31, des éléments de liaison 5, ici sous la forme de croisillons, lient rigidement les cotés adjacents 312 respectivement 313 entre eux des deux modules solaires élémentaires adjacents. Ces croisillons permettent de solidariser les modules solaires élémentaires et une rigidification de l'ensemble 2 est ainsi constituée.

Au niveau des moyens de traitement 32, un élément de liaison 6, ici sous la forme d'une barre, lie les extrémités des leviers 34. L'élément de liaison 6 peut être connecté au dispositif de commande du suivi précité. La rotation des moyens de traitement vis à vis du bâti permet un suivi journalier du Soleil.

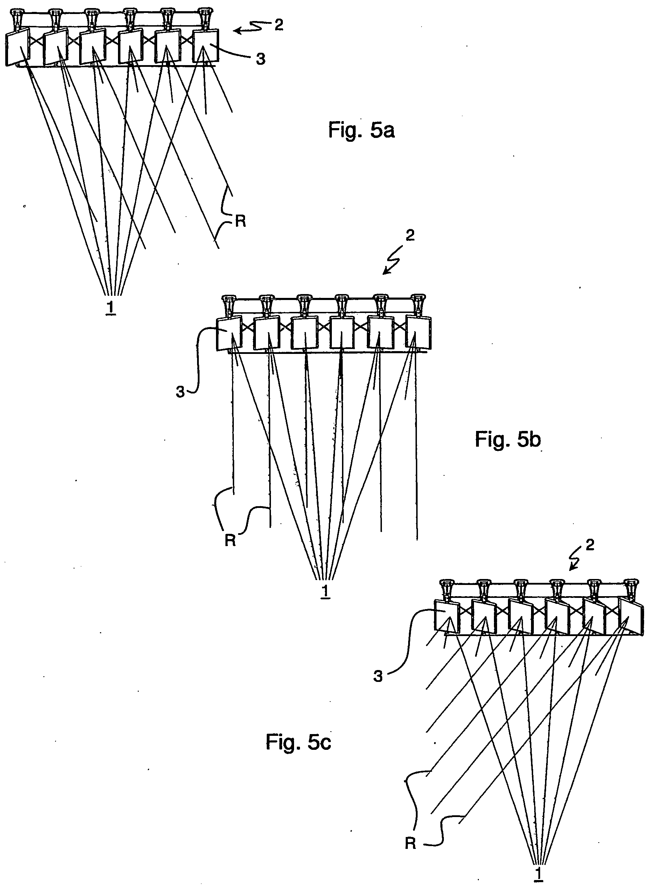

En référence aux figures 5a à 5c, nous allons décrire le fonctionnement du dispositif de récupération du rayonnement solaire. La figure 5a est l'état du dispositif le matin, la figure 5b, le midi et la figure 5c, le soir. Il est reconnu que le suivi solaire journalier augmente de façon significative le rendement des capteurs solaires. Il permet une orientation directe de la normale du capteur sur le soleil et augmente environ d'un tiers la production d'énergie électrique ou thermique. De plus, la conception par modules et le suivi saisonnier du soleil grâce au mouvement oscillant d'un bâti rend la combinaison des deux mouvements capable de focaliser un rayonnement suivant deux directions en un point.

Chaque cadre réflecteur est initialement, au moment de son montage sur le lieu, pré orienté pour réfléchir le rayonnement solaire R vers lé foyer fixe 1. Ce réglage correspond à une orientation d'une normale à la surface réfléchissante confondue avec une bissectrice entre la position du soleil à un instant donné et la cible que forme le foyer fixe.

En fonctionnement, lorsque le soleil change de position, l'ensemble des cadres réflecteurs est apte à tourner de la moitié du débattement solaire pour renvoyer les rayons réfléchis vers la cible. L'angle de correction est donc identique pour tous les réflecteurs permettant ainsi d'utiliser une commande unique simple du suivi solaire associée au dispositif de commande de suivi. Pour réaliser cette commande unique, les bâtis oscillants sont alignés et maintenus à égale distance par les croisillons de liaison 5. Cet alignement permet la mise en place d'une tringlerie (51,52 et 6) de commande entraînant de façon identique l'ensemble des miroirs, tringlerie reliée au dispositif de commande du suivi solaire.

La commande unique pour un grand nombre de module est rendue viable grâce à une conception particulière comme cela a été précédemment décrit. Pour le suivi saisonnier, la conception du bâti oscillant permet de minimiser les efforts de pilotage en plaçant le centre de gravité de l'ensemble sensiblement au niveau de l'axe d'oscillation du bâti oscillant. De même, pour le suivi journalier, la conception du cadre réflecteur permet de minimiser les efforts de pilotage en plaçant le centre de gravité du cadre réflecteur sensiblement au niveau de l'axe de rotation du cadre réflecteur par rapport au bâti oscillant. Cette conception particulière permet d'avoir un très faible besoin en énergie pour le pilotage de l'ensemble formé de réflecteurs. Cela permet d'améliorer la focalisation solaire par un besoin plus faible en énergie pour asservir la structure à la poursuite du soleil.

La structure modulaire du dispositif de récupération du rayonnement solaire permet :
- un facteur de concentration variable suivant l'application, facteur qui est lié au nombre de modules solaire élémentaires orientés sur une cible réceptrice ; la concentration du cadre réflecteur mobile allant de 1 à 30, par exemple,
- des surfaces de captation variables dépendant du nombre de module élémentaires (par exemple de 10 à 1000 m²),
- de jouer sur le nombre des foyers fixes : possibilité de pointer sur des foyers différents suivant le besoin du moment, souplesse liée au foyer fixe, due à la dissociation du concentrateur et du foyer,
- de proposer différentes surfaces de captation élémentaires (par modules) de réflecteurs (par exemple de 1 à 5 m2)

Il est possible ainsi d'envisager toutes solutions d'agencement et de configuration d'installation grâce à la distance variable entre le foyer fixe et les modules solaires élémentaires, et, une diversité de l'utilisation du foyer (thermique, électrique, lumière ou mixte).

Ceci entraîne une réduction des coûts de fabrication par une simplification du matériel : nombre de pièces nécessaires en plus grande quantité et moins complexes.

Pour les grandes dimensions il est possible de disposer de plusieurs bandes de modules solaires élémentaires : soit en palier sur terrain incliné, soit les uns derrière les autres tout en respectant la distance d'occultation due à l'ombre de la rangée de modules précédent

D'autres types de dispositions sont envisageables suivant les différentes conditions de géographie, climat, inclinaison des sols, etc.....

Les nouveaux besoins en énergie (thermique, électrique) à travers le monde sont plus à de petites unités bien implantables, gérées et facilement entretenues par une population locale, qu'a de grandes centrales qui redistribuent à travers des réseaux nécessitant de grosses infrastructures.

Il est à noter que la moindre intervention sur un cadre réflecteur, n'entraîne aucune perturbation pour le reste du dispositif de récupération du rayonnement solaire selon l'invention.

De plus, ce dernier est d'une hauteur humaine facilitant le transport, la mise en place, la maintenance, le nettoyage, l'occultation lors d'intempéries, diminuant la prise au vent, les coûts d'assemblage et améliorant l'intégration dans un environnement urbain ou non.

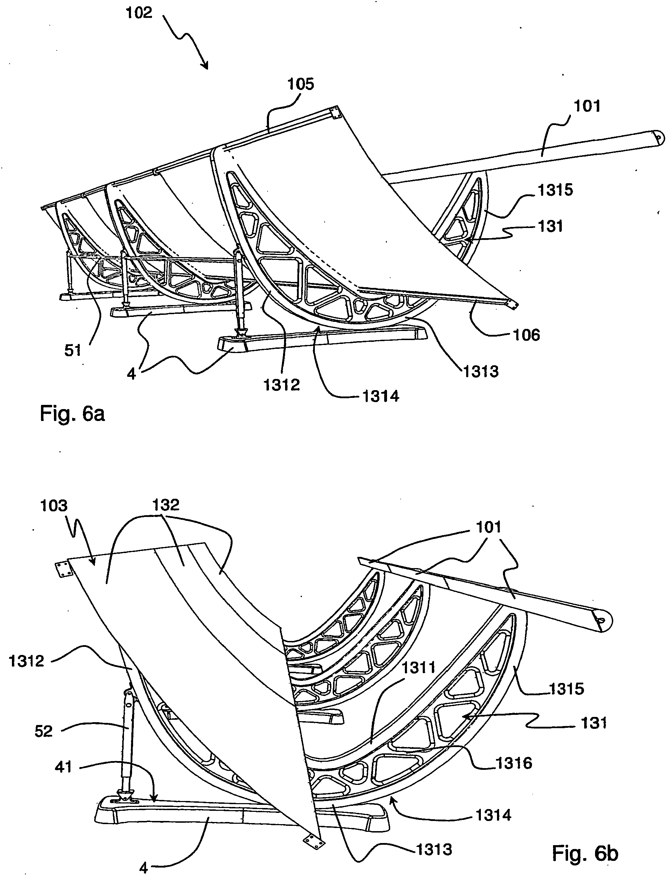

Nous allons maintenant décrire, en référence aux figures 6a et 6b, un deuxième mode de réalisation d'un ensemble de modules solaires élémentaires . Les éléments communs avec le premier mode de réalisation précédemment décrit sont indiqués sur les figures avec la même référence. L'ensemble 102 est, ici formé par trois modules solaires élémentaires 103. Dans ce mode de réalisation de l'invention, chaque module solaire élémentaire 103 comporte un foyer propre 101 qui peut comprendre, par exemple, des photopiles.

Le module solaire élémentaire 103 comporte, en plus du socle 4 apte à être posé sur le sol et à répartir les efforts :
- un bâti 131 posé sur le socle 4 et apte à rouler sur ce dernier lors d'un mouvement d'oscillation de manière similaire au bâti 31 du mode de réalisation précédent,
- des moyens formant réflecteur 132, ici, montés solidairement sur le bâti 131
- d'un système de commande 51,52 pour le suivi saisonnier, et,
- d'un foyer 101, ici, monté solidairement sur le bâti 131.

Le bâti 131 est ici de forme générale en croissant et comporte, extérieurement, trois portions incurvées 1312, 1313, 1315 consécutives. En particulier, la portion 1313 est de forme circulaire et comporte une surface 1314 arrondie de forme cylindrique de révolution qui est apte à coopérer avec la surface 41 sensiblement plane du socle 4 associé afin de permettre au bâti d'osciller. Intérieurement, le bâti 131 comporte une portion incurvée 1311 concave. Des extrémités de la portion incurvée 1311 rejoignent respectivement la portion incurvée 1312 et la portion incurvée 1315 et forment des extrémités de la forme en croissant du bâti 131 et sont de ce fait en regard l'une de l'autre. Sur l'un des flancs de la portion incurvée 1311 est monté un moyen formant réflecteur 103, ici, à l'aide de barres 105 et 106. Sur l'autre des flancs de la portion incurvée 1311, au niveau de l'extrémité associée, est monté un foyer 101, ce dernier étant alors en regard du moyen formant réflecteur 103.

Entre la portion incurvée 1311, d'une part, et, d'autre part, les trois portions incurvées 1312, 1313, 1315 consécutives, une masse additionnelle 1316. Le rôle de cette masse 1316 est de permettre de :
- rigidifier le bâti 131,
- avoir un centre de gravité du module solaire élémentaire 103 qui est sensiblement sur un axe de révolution de la surface arrondie 1314. Ceci permet d'équilibrer de manière optimale le module dans un mouvement d'oscillation autour de cet axe de révolution qui devient alors l'axe d'oscillation du module.

Il est à noter que les barres 105 et 106 sont interconnectable d'un module à l'autre afin de relier ensemble des modules solaires élémentaires.

La forme du moyen formant réflecteur est telle que le foyer 101 associé reçoit de sa part un rayonnement solaire concentré. Cette disposition du foyer vis à vis du moyen formant réflecteur est libre de tout obstacle permettant une absence d'ombre. La densité lumineuse de concentration solaire au foyer est donc la plus régulière possible ce qui permet de rendre viable l'utilisation de photopile au foyer par exemple. En effet, un ensemble de photopiles interconnecté ne fonctionne pas de façon optimale si la densité lumineuse n'est pas régulière. Le foyer peut être utilisée de plusieurs façons (par exemple) :
- avec des photopiles de rendement modéré déposés sur verre et refroidis par un liquide calorifique permettant d'effectuer de la cogénération,
- avec des photopiles de haut rendement refroidis par un liquide calorifique permettant d'effectuer éventuellement de la cogénération. Cette solution privilégiant la production électrique,
- sur un échangeur thermique de type air chaud permettant d'alimenter un moteur type « Ericsson », par exemple.

L'ouverture de l'angle d'illumination du foyer vis à vis du moyen formant réflecteur reste inférieur à 90° ce qui permet d'assurer un rendement des photopiles optimum en limitant la fraction réfléchie par la photopile.

Comme pour le mode de réalisation précédemment décrit, l'ensemble 102 de modules élémentaires reste d'une hauteur raisonnable qui peut être inférieure à 2m vis à vis du lieu d'installation (sol, toit, etc...) facilitant son intégration dans un paysage urbain. Les modules solaires élémentaires de préférence de petite taille facilitent ainsi le transport, la mise en oeuvre, la maintenance et le nettoyage.

Pour les grandes dimensions il est possible de disposer de plusieurs bandes de concentrateur, par exemple, en palier sur terrain incliné soit les uns derrière les autres tout en respectant la distance d'occultation due à l'ombre de la rangée de modules précédent

D'autres types de dispositions sont envisageable suivant les différentes conditions de géographie, climat, inclinaison des sols, etc...

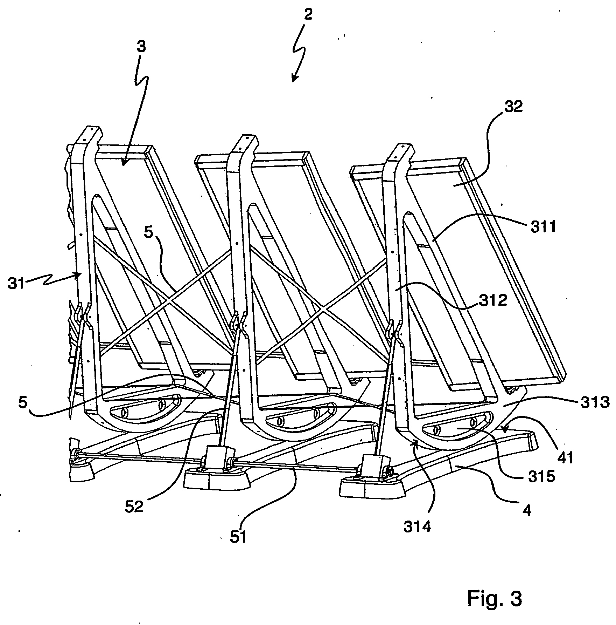

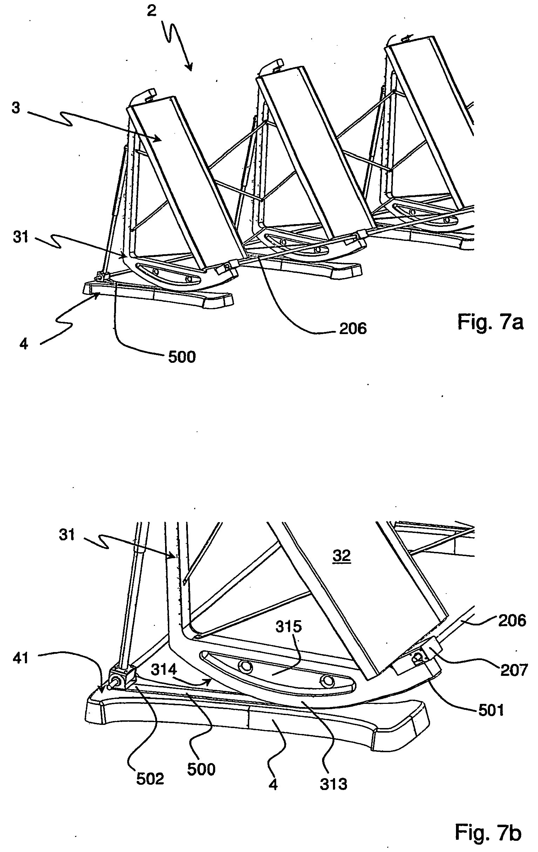

En référence aux figures 7a et 7b, nous allons décrire une variante de réalisation du premier mode de réalisation des figures 2 et 3 précédemment décrit et reflétent l'invention en accord avec la revendication 1.

Dans cette variante, l'élément de liaison 6 et les leviers 34 (cf figure 2) sont remplacés par une barre 206 formant arbre et un boîtier de transmission 207 du mouvement de la barre 206 au moyen de traitement 32. Le boîtier 206 peut comprendre, par exemple, une vis sans fin liée à la barre 206 engrenant un engrenage lié au moyen de traitement.

Une bande semi-rigide 500 relit le socle 4 au bâti 31 en s'intercalant entre la surface 41 du socle et la surface arrondi 314 du bâti. La bande semi-rigide 500 est liée à une extrémité 501 au bâti et à une autre extrémité 502 au socle. Lorsque le bâti change de position lors d'un mouvement d'oscillation, il roule vis à vis du socle en s'enroulant ou en se déroulant sur la bande semi-rigide 500 suivant son sens d'oscillation. Cette bande est de section générale rectangulaire et présente un profil, au niveau des surfaces aptes à venir en contact avec la surface 41 du socle et la surface arrondie 314 du bâti, respectivement, permettant d'évacuer ou de chasser tout débris éventuellement présent. La bande 500 est dite semi-rigide car elle présente vue sa forme une souplesse de flexion dans son sens longitudinale qui est utilisé lorsque le bâti roule dessus et que la bande s'enroule ou se déroule lors d'un mouvement d'oscillation du bâti. Par contre, elle présente une rigidité qui est mise à contribution dans tout autre type de mouvement relatif entre le bâti et le socle. Cette bande semi-rigide assure un mouvement sans glissement entre le bâti et le socle. L'absence du glissement permet de garantir le parallélisme des différents bâtis d'un ensemble 2 au cours de manoeuvres de suivi solaire. De plus, cette bande semi-rigide 500 assure une commande sans effort lors de mouvements de suivi saisonnier du bâti qui oscille ainsi de façon à présenter un point de contact au sol toujours à la vertical du déplacement du centre de gravité.

Il est à noter que cette bande semi-rigide peut-être incluse de manière similaire dans le module solaire élémentaire 103 des figures 6a et 6b.

D'un point de vue matériaux, la plus grosse partie de l'ouvrage est en béton coulé (bâti 31, socle 4) dans un moule, et, sa fabrication peut s'effectuer sur place, à l'échelle humaine, puisque l'aspect modulable de la structure nécessite seulement de fabriquer des pièces en béton de taille modeste sans aucun moyen de levage particulier. Le dispositif de récupération du rayonnement solaire selon l'invention est donc adapté pour les sites isolés et les villages de pays en voie de développement.

L'utilisation d'un béton composite offre un meilleur compromis en coûts (simplicité, reproductibilité), en stabilité (masse créant une insensibilité vis à vis du vent) et en vieillissement.

Pour s'affranchir de la fragilité à la traction, les pièces en béton sont armées d'une âme métallique de type fils torsadé et l'incorporation de fibres courtes noyées dans la masse permet de retarder le départ d'éventuelles fissures.

Cette solution matériau permet d'obtenir, à un coût modéré, des pièces de forte section donnant rapidement de la rigidité à l'ensemble et déplaçant ainsi les fréquences de résonance lié à la sollicitation du vent, afin que cette dernière ne puissent pas les atteindre. Le béton permet aussi de donner une masse importante qui stabilise l'ensemble vis-à-vis des sollicitations extérieures et assure un positionnement plus stable vis à vis su soleil.

L'incompatibilité apparente d'avoir des pièces en mouvements lourdes est donc résolu grâce à deux paramètres : la cinématique décrit ci-dessus permet de s'affranchir du poids des pièces en modérant l'effort de commande grâce à un centre de gravité toujours à la vertical du point de contact et positionné sensiblement sur l'axe d'oscillation. Enfin, comme les vitesses de suivi sont très lentes (180°en 10h pour le journalier et 40° en 6mois pour le saisonnier), aucun phénomène dynamique ne vient contrarier la possibilité d'avoir des masses en mouvement importantes.

La composition du béton comprend du sable, du gravier et/ou de l'argile expansé, du ciment, des fibres courtes et du fer torsadé. La composition du béton fait apparaître un choix possible entre le gravier et l'argile qui s'effectue en fonction du besoin de modération du poids des pièces à fabriquer pour facilité la manutention ou le transport.

Bien entendu, la présente invention n'est nullement limitée à l'exemple décrit et représenté, fourni à titre uniquement illustratif.

## Revendications

1. Module solaire élémentaire (3) comportant un bâti (31) destiné à reposer directement sur des moyens formant socle (4), des moyens de traitement (32) d'un rayonnement solaire montés sur le bâti, et comportant, intercalée entre les moyens formant socle et le bâti, une surface arrondie (314) de forme cylindrique de révolution dont un axe de révolution est un axe d'oscillation autour duquel le bâti est destiné à osciller par rapport aux moyens formant socle, **caractérisé en ce que** le module élémentaire comporte en outre une bande (500) intercalée entre les moyens formant socle et la surface arrondi (314) du bâti.

2. Module solaire élémentaire selon la revendication 1, **caractérisé en ce que** la bande (500) est fixée à une extrémité aux moyens formant socle et à une autre extrémité au bâti.

3. Module solaire élémentaire selon la revendication 1 ou 2. **caractérisé en ce que** la bande (500) présente un profil de surfaces aptes à être en contact avec la surface arrondie du bâti et /ou les moyens formant socle agencé de sorte à permettre l'évacuation d'éventuels débris.

4. Module solaire élémentaire selon l'une des revendications 2 à 4, **caractérisé en ce que** la bande (500) est flexible dans une direction perpendiculaire à des surfaces aptes à être en contact avec la surface arrondie du bâti et /ou les moyens formant socle, et rigide dans les autres directions.

5. Module solaire élémentaire selon l'une des revendications 1 à 4, **caractérisé en ce que** l'axe d'oscillation passe sensiblement par un centre de gravité du module solaire élémentaire.

6. Module solaire élémentaire selon l'une des revendications 1 à 5, **caractérisé en ce que**, les moyens de traitement (32) étant montés mobiles sur le bâti par une liaison pivot, un axe de rotation (33) de la liaison pivot passe sensiblement par un centre de gravité des moyens de traitement.

7. Module solaire élémentaire selon la revendication 6, **caractérisé en ce que** l'axe de rotation (33) est sensiblement orthogonal à l'axe d'oscillation du bâti.

8. Module solaire élémentaire selon l'une des revendications 1 à 7, **caractérisé en ce que** les moyens de traitement comportent au moins un capteur solaire.

9. Module solaire élémentaire selon l'une des revendications 1 à 8. **caractérisé en ce que** les moyens de traitement comportent au moins une surface réfléchissante du rayonnement solaire.

10. Module solaire élémentaire selon la revendication 9, **caractérisé en ce que** la surface réfléchissante est concave.

11. Dispositif de récupération d'un rayonnement solaire comportant au moins un foyer fixe (1) apte à recevoir le rayonnement solaire, un dispositif de commande de suivi d'un mouvement solaire, **caractérisé en ce qu'**il comprend au moins un module solaire élémentaire (3) selon l'une des revendications 1 à 10 destiné à être commandé par le dispositif de commande.

12. Dispositif selon la revendication 11, **caractérisé en ce qu'**il comporte au moins deux modules solaires élémentaires, au moins un premier élément de liaison (5) des bâtis de deux modules solaires élémentaires contigus, au moins un deuxième élément de liaison (206) des moyens de traitement (32) des deux modules solaires élémentaires contigus.

13. Dispositif selon la revendication 12, **caractérisé en ce que** le dispositif de commande est destiné à agir sur au moins l'un des premier et deuxième éléments de liaison.

14. Dispositif selon l'un des revendications 11 à 13, **caractérisé en ce qu'**il comporte des moyens formant socle (4) destinés à soutenir le bâti (31) du module solaire élémentaire.

## Patentansprüche

1. Elementares Solarmodul (3), umfassend einen Rahmen (31), der ausgelegt ist, um direkt auf Mitteln aufzuliegen, die einen Sockel (4) bilden, Mittel zur Verarbeitung (32) von solarer Strahlung, montiert auf den Rahmen, umfassend, eingeschoben zwischen den Mitteln, die einen Sockel bilden, und dem Rahmen, eine abgerundete Drehfläche (314) mit zylindrischer Form, wovon eine Drehachse eine Schwingungsachse ist, um die der Rahmen ausgelegt ist, um mit Bezug auf die Mittel, die einen Sockel bilden, zu schwingen, **dadurch gekennzeichnet, dass** das elementare Modul außerdem einen Streifen (500) umfasst, der zwischen den Mitteln, die einen Sockel bilden, und der abgerundeten Fläche (314) des Rahmens eingeschoben ist.

2. Elementares Solarmodul nach Anspruch 1, **dadurch gekennzeichnet, dass** der Streifen (500) an einem Ende an die Mittel, die einen Sockel bilden, und an einem anderen Ende an den Rahmen befestigt ist.

3. Elementares Solarmodul nach Anspruch 1 oder 2, **dadurch gekennzeichnet, dass** der Streifen (500) ein Profil von Flächen aufweist, die geeignet sind, um mit der abgerundeten Fläche des Rahmens, und/oder den Mitteln, die einen Sockel bilden, in Kontakt zu sein, welcher derart angeordnet ist, dass die Entfernung von eventuellen Rückständen ermöglicht ist.

4. Elementares Solarmodul nach einem der Ansprüche 2 bis 4, **dadurch gekennzeichnet, dass** der Streifen (500) in einer Richtung senkrecht zu Flächen flexibel ist, die geeignet sind, um mit der abgerundeten Fläche des Rahmens und/oder den Mitteln, die einen Sockel bilden, in Kontakt zu sein, und starr in den anderen Richtungen ist.

5. Elementares Solarmodul nach einem der Ansprüche 1 bis 4, **dadurch gekennzeichnet, dass** die Schwingungsachse im Wesentlichen durch einen Schwerpunkt des elementaren Solarmoduls verläuft.

6. Elementares Solarmodul nach einem der Ansprüche 1 bis 5, **dadurch gekennzeichnet, dass**, da die Mittel zur Verarbeitung (32) beweglich durch eine Schwenkverbindung auf den Rahmen montiert sind, eine Rotationsachse (33) der Schwenkverbindung im Wesentlichen durch einen Schwerpunkt der Mittel zur Verarbeitung verläuft.

7. Elementares Solarmodul nach Anspruch 6, **dadurch gekennzeichnet, dass** die Rotationsachse (33) im Wesentlichen orthogonal zur Schwingungsachse des Rahmens ist.

8. Elementares Solarmodul nach einem der Ansprüche 1 bis 7, **dadurch gekennzeichnet, dass** die Mittel zur Verarbeitung mindestens einen Solarsensor umfassen.

9. Elementares Solarmodul nach einem der Ansprüche 1 bis 8, **dadurch gekennzeichnet, dass** die Mittel zur Verarbeitung mindestens eine reflektierende Fläche der solaren Strahlung umfassen.

10. Elementares Solarmodul nach Anspruch 9, **dadurch gekennzeichnet, dass** die reflektierende Fläche konkav ist.

11. Einrichtung zur Gewinnung von solarer Strahlung, umfassend mindestens einen festen Brennpunkt (1), der geeignet ist, um solare Strahlung zu empfangen, eine Einrichtung zur Steuerung der Nachverfolgung der solaren Strahlung, **dadurch gekennzeichnet, dass** sie mindestens ein elementares Solarmodul (3) nach einem der Ansprüche 1 bis 10 umfasst, das ausgelegt ist, um von der Steuereinrichtung gesteuert zu werden.

12. Einrichtung nach Anspruch 11, **dadurch gekennzeichnet, dass** sie mindestens zwei elementare Solarmodule umfasst, mindestens ein erstes Element zur Verbindung (5) der Rahmen von zwei benachbarten elementaren Solarmodulen, mindestens ein zweites Element zur Verbindung (206) der Mittel zur Verarbeitung (32) der zwei benachbarten elementaren Solarmodule.

13. Einrichtung nach Anspruch 12, **dadurch gekennzeichnet, dass** die Steuereinrichtung ausgelegt ist, um auf mindestens eines des ersten und des zweiten Elements zur Verbindung einzuwirken.

14. Einrichtung nach einem der Ansprüche 11 bis 13, **dadurch gekennzeichnet, dass** es Mittel umfasst, die einen Sockel (4) bilden, die ausgelegt sind, um den Rahmen (31) des elementaren Solarmoduls zu tragen.

## Claims

1. Basic solar module (3) comprising a frame (31) intended to be placed directly on means forming a base (4), means for processing (32) solar radiation mounted on the frame and comprising inserted between the means forming a base and the frame, a rotating cylindrical rounded surface (314) of which one axis of revolution is a swinging axis about which the frame is intended to swing with respect to the means forming a base, **characterised in that** the basic module further comprises a strip (500) inserted between the means forming a base and the rounded surface (314) of the frame.

2. Basic solar module according to claim 1, **characterised in that** the strip (500) is fixed at one end to the means forming a base and at another end to the frame.

3. Basic solar module according to claim 1 or 2, **characterised in that** the strip (500) has a surface profile able to be in contact with the rounded surface of the frame and/or the means forming a base arranged in such a way as to allow for the possible removal of debris.

4. Basic solar module according to one of claims 2 to 4, **characterised in that** the strip (500) is flexible in a direction perpendicular to surfaces able to be in contact with the rounded surface of the frame and/or the means forming a base, and rigid in the other directions.

5. Basic solar module according to one of claims 1 to 4, **characterised in that** the swinging axis passes substantially through a centre of gravity of the basic solar module.

6. Basic solar module according to one of claims 1 to 5, **characterised in that**, as the means for processing (32) are mounted mobile on the frame by a pivot connection, an axis of rotation (33) of the pivot connection passes substantially through a centre of gravity of the means for processing.

7. Basic solar module according to claim 6, **characterised in that** the axis of rotation (33) is substantially orthogonal to the swinging axis of the frame.

8. Basic solar module according to one of claims 1 to 7, **characterised in that** the means for processing comprise at least one solar sensor.

9. Basic solar module according to one of claims 1 to 8, **characterised in that** the means for processing comprise at least one reflective surface of the solar radiation.

10. Basic solar module according to claim 9, **characterised in that** the reflective surface is concave.

11. Device for recovering solar radiation comprising at least one fixed focus (1) able to receive the solar radiation, a control device for following a solar movement, **characterised in that** it comprises at least one basic solar module (3) according to one of claims 1 to 10 intended to be controlled by the control device.

12. Device according to claim 11, **characterised in that** it comprises at least two basic solar modules, at least one first connection element (5) frames of two contiguous basic solar modules, at least one second connection element (206) of the means for processing (32) two contiguous basic solar modules.

13. Device according to claim 12, **characterised in that** the control device is intended to act on at least one of the first and second connection elements.

14. Device according to one of claims 11 to 13, **characterised in that** it comprises means forming a base (4) intended to support the frame (31) of the basic solar module.
